# FASCICULE DE BREVET EUROPEEN

(11) **EP 0 893 060 B1**
(45) Date de publication et mention de la délivrance du brevet: **23.05.2001**
(21) Numéro de dépôt: 98401611.3
(22) Date de dépôt: 29.06.1998
(51) Int. Cl.: A21B 1/26, F24C 15/32

(54) **Four pour le chauffage d'aliments**
Ofen zum Erwärmen von Lebensmitteln
Oven for heating food

(30) Priorité: 21.07.1997 FR 9709207
(43) Date de publication de la demande: 27.01.1999
(73) Titulaire: Sogerma, 33700 Mérignac (FR)
(72) Inventeur: Pauly, Alexis, 17300 Rochefort (FR); Lequertier, Jean-Michel, 17620 Saint Jean d'Angle (FR)
(74) Mandataire: Bonnetat, Christian

(56) Documents cités:
- WO-A-89/00381
- FR-A- 2 535 036
- US-A- 5 203 315

## Description

La présente invention concerne un four pour le chauffage d'aliments. Quoique non exclusivement, le four de la présente invention est particulièrement adapté à la décongélation, le réchauffage et/ou la cuisson de plats précuisinés à bord des avions.

On connaît déjà, par exemple par les documents GB-A-2 078 365 et US-A-4 512 327, des fours de ce type comportant :
- un caisson délimitant une enceinte de chauffage et pourvu, outre d'un plafond et d'un plancher, d'une porte d'accès avant, de deux parois latérales opposées et d'une paroi arrière ;
- un râtelier servant d'étagères à des supports (plateaux, grilles, etc...) sur lesquels sont placés lesdits aliments et pourvu de deux parois latérales perforées opposées, ledit râtelier étant disposé à l'intérieur dudit caisson de façon à créer deux espaces latéraux opposés (ci-après désignés respectivement par premier et second espaces latéraux) entre lesdites parois latérales dudit râtelier et lesdites parois latérales dudit caisson ;
- une machine soufflante à aspiration centrale et à soufflage périphérique, montée sur ladite paroi arrière dudit caisson ;
- des moyens de guidage de l'air soufflé par ladite machine soufflante pour introduire latéralement cet air soufflé entre ledit râtelier et ledit caisson ; et
- des moyens de chauffage dudit air soufflé par ladite machine soufflante.

Dans ces fours connus, l'air soufflé par la machine soufflante et chauffé par lesdits moyens de chauffage forme deux flux en parallèle, qui sont respectivement soufflés vers l'avant dans les deux espaces latéraux, puis pénètrent à l'avant du râtelier. Ils sont aspirés centralement dans ledit râtelier par ladite machine soufflante, en revenant vers l'arrière. Seule une faible fraction de l'air soufflé par la machine passe transversalement à l'intérieur du râtelier par les perforations de ses parois latérales afin d'éviter les poches d'air.

Il en résulte que la partie longitudinalement médiane dudit râtelier reçoit les deux flux chauds et est donc plus chauffée que les parties latérales dudit râtelier, qui ne reçoivent qu'un seul des deux flux. Par ailleurs, d'autres flux d'air chaud soufflé pénètrent dans le râtelier par ses parties supérieure et inférieure, ajoutant leur chauffage à celui des flux précédents.

De ce qui précède, on conçoit aisément que le chauffage des aliments à l'intérieur dudit râtelier ne peut être uniforme, et que, au contraire, il dépend fortement de l'emplacement desdits aliments dans le râtelier.

FR 2 535 036 décrit un four à recyclage d'air chaud de structure complexe, dont le principe repose sur une circulation de l'air alternée dans deux sens opposés.

La présente invention a pour objet de remédier à ces inconvénients, et elle concerne un four du type rappelé ci-dessus, dans lequel la température est uniforme, quel que soit l'emplacement des aliments à l'intérieur dudit râtelier.

A cette fin, selon la présente invention, le four du type mentionné ci-dessus est remarquable en ce que lesdits moyens de guidage de l'air, soufflé par ladite machine soufflante et chauffé, adressent ledit air uniquement audit premier espace latéral et en ce que ladite machine soufflante aspire ledit air dans ledit second espace latéral.

Ainsi, l'air soufflé forme un flux unique circulant dans un seul sens à l'intérieur dudit four. Ce flux unique, soufflé dans ledit premier espace latéral par ladite machine soufflante, pénètre dans ledit râtelier à travers la paroi latérale correspondante du râtelier, les perforations de ladite paroi subdivisant ledit flux en une pluralité de courants chauffant uniformément l'intérieur dudit râtelier, puis lesdits courants traversent les perforations de l'autre paroi latérale dudit râtelier pour reconstituer ledit flux unique dans ledit second espace latéral, d'où il est aspiré par ladite machine soufflante. On obtient ainsi une température uniforme à l'intérieur dudit four.

Selon l'invention, lesdits moyens de guidage de l'air soufflé par la machine soufflante comportent un diffuseur, ouvert vers ledit premier espace latéral pour répartir uniformément l'air soufflé dans celui-ci et interdire audit air soufflé de se diriger vers ledit second espace latéral.

Par ailleurs, pour faciliter l'aspiration de la machine soufflante dans le second espace latéral, on prévoit des moyens de guidage convergents adressant, à l'aspiration centrale de ladite machine soufflante, l'air circulant dans ledit second espace latéral.

De plus, afin d'éviter l'apparition de flux d'air chaud parasites dans les parties supérieure et/ou inférieure du caisson, il est avantageux que ledit diffuseur et lesdits moyens de guidage convergents s'étendent sur toute la hauteur desdits espaces latéraux.

Dans un mode de réalisation avantageux du four conforme à la présente invention, ledit diffuseur et lesdits moyens de guidage convergents forment un ensemble comportant :
- deux plaques parallèles entre elles et à la paroi arrière dudit caisson ;
- une lame au moins approximativement en forme de V, emprisonnée entre lesdites plaques et délimitant avec elles un espace convergent qui s'évase en direction dudit second espace latéral et communique avec celui-ci par son extrémité évasée ;
- une ouverture pratiquée dans l'une desdites plaques au voisinage du sommet dudit espace convergent et susceptible de mettre en communication celui-ci avec l'aspiration centrale de ladite machine soufflante ; et
- une volute de diffusion disposée du côté de la plaque pourvue de ladite ouverture, opposé audit espace convergent, ladite volute étant ouverte à l'opposé dudit espace convergent, en direction dudit premier espace latéral.

Avantageusement, ledit caisson présente des réglettes longitudinales à l'intérieur des parois latérales dudit caisson.

Par ailleurs, des bossages longitudinaux sont prévus dans les parois latérales dudit caisson de façon à assurer un guidage et une répartition homogène de l'air dans lesdits espaces latéraux.

De préférence, deux lèvres verticales, solidaires chacune d'une paroi latérale dudit râtelier et sensiblement à angle droit par rapport à celle-ci sont prévues en bout de râtelier.

Il est également avantageux que deux lèvres solidaires, respectivement, desdites plaques et formant un angle avec celles-ci, interdisent toute circulation d'air entre lesdits premier et second espaces latéraux à l'arrière dudit râtelier.

Les figures du dessin annexé feront bien comprendre comment l'invention peut être réalisée. Sur ces figures, des références identiques désignent des éléments semblables.

La figure 1 est une vue en perspective d'un exemple de réalisation d'un four selon l'invention.

La figure 2 est une vue de dessus, suivant le plan de coupe II-II de la figure 1, du four selon l'invention.

La figure 3 est une section transversale suivant la ligne III-III de la figure 2, du four de la figure 1.

La figure 4 est une vue en élévation du diffuseur.

La figure 5 est une coupe selon la ligne V-V de la figure 4.

La figure 6 est une vue en élévation des moyens de guidage convergents.

La figure 7 est une coupe selon la ligne VII-VII de la figure 6.

La figure 8 est une vue en perspective éclatée de l'ensemble diffuseur-moyens de guidage convergents-soufflante.

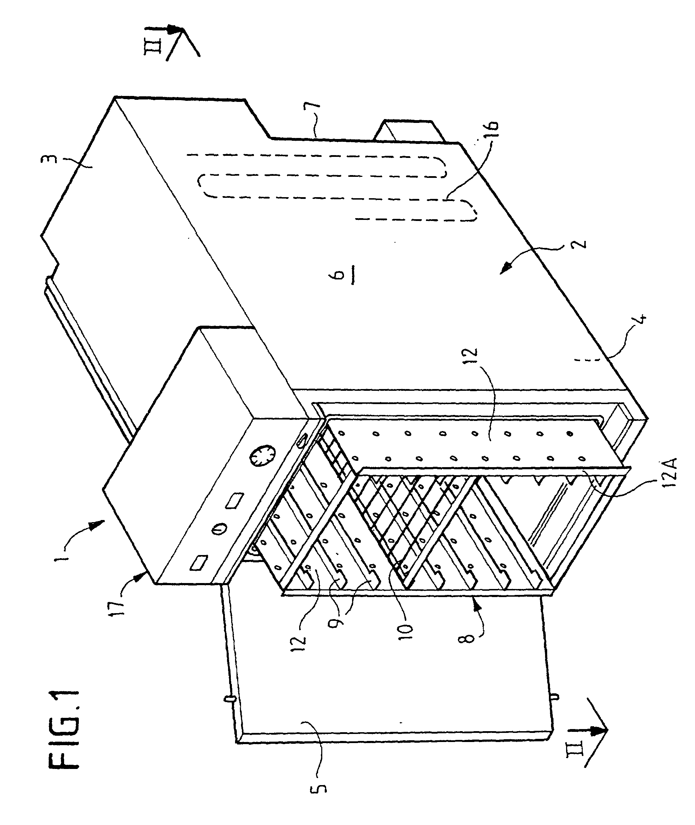

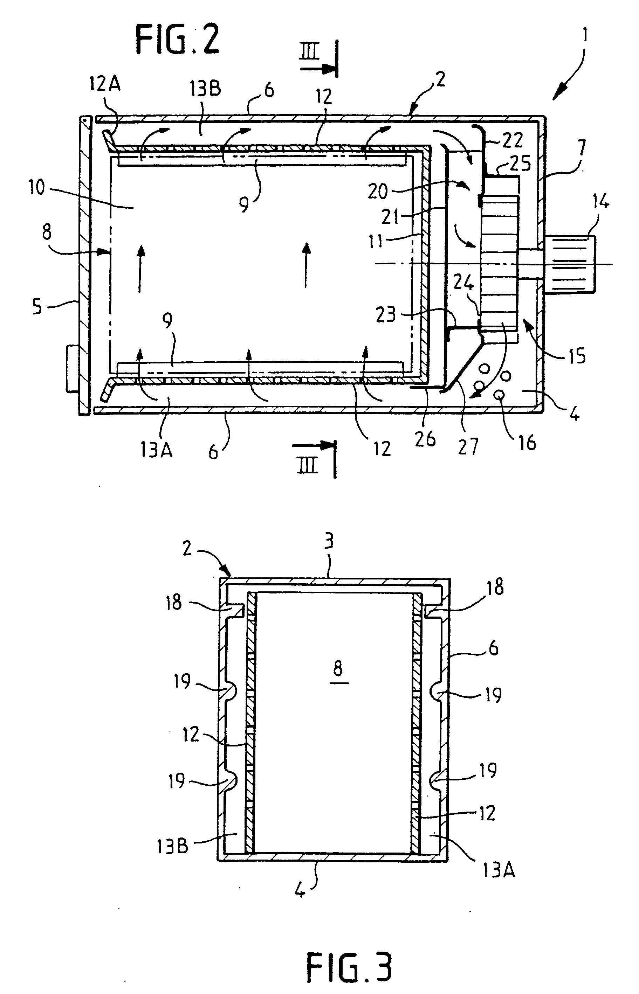

En regard des figures 1 et 2 notamment, le four 1 pour le chauffage d'aliments comporte :
- un caisson 2 délimitant une enceinte de chauffage et pourvu, outre d'un plafond 3 et d'un plancher 4, d'une porte d'accès avant 5, de deux parois latérales opposées 6 et d'une paroi arrière 7 ;
- un râtelier 8 servant d'étagères 9 à des supports 10 (plateaux, grilles, etc...) sur lesquels sont placés lesdits aliments, et pourvu seulement d'une paroi arrière 11 et de deux parois latérales perforées opposées 12, le râtelier 8 étant disposé à l'intérieur du caisson 2 de façon à créer des premier et second espaces latéraux opposés 13A, 13B entre les parois latérales 12 du râtelier 8 et les parois latérales 6 du caisson 2 ;
- une machine soufflante (ou turbine) 14 à aspiration centrale et à soufflage périphérique, montée de façon centrale sur la paroi arrière 7 du caisson ;
- des moyens de guidage 15 de l'air soufflé par la machine soufflante 14 pour l'introduire latéralement entre le râtelier 8 et le caisson 2 ; et
- des moyens de chauffage (symboliquement représentés par une résistance 16 sur la figure 1) de l'air soufflé par la machine soufflante, ainsi qu'un panneau de commande usuel pour four 17.

Plus particulièrement, selon l'invention, les moyens de guidage 15 de l'air soufflé par la machine soufflante 14 adressent ledit air uniquement audit premier espace latéral 13A et la machine soufflante 14 aspire ledit air dans ledit second espace latéral 13B, l'air suivant le parcours indiqué par les flèches sur la figure 2.

Par ailleurs, en regard de la figure 3, on voit que le caisson 2 présente, avantageusement, des réglettes longitudinales 18 à l'intérieur des parois latérales 6 du caisson 2 qui :
- assurent un centrage du râtelier 8 dans le caisson 2 pour respecter les sections de passage d'air des deux espaces latéraux 13A, 13B,
- évitent une fuite d'air entre l'intérieur du râtelier 8 et les deux espaces latéraux 13A, 13B par le haut du râtelier (on notera qu'une fuite d'air par le bas du râtelier n'est pas non plus possible car ce dernier est en appui direct sur le plancher 4 du caisson 2).

De plus, des bossages longitudinaux 19 dans les parois latérales 6 du caisson 2 assurent un guidage de l'air dans les espaces latéraux 13A, 13B pour une répartition homogène entre le haut et le bas du caisson.

Ces dispositions garantissent plus encore que l'air ne peut circuler d'un espace latéral à l'autre qu'à travers le râtelier 8, d'autant plus que deux lèvres verticales 12A, solidaires chacune d'une paroi latérale 12 et sensiblement à angle droit par rapport à celle-ci, sont prévues en bout de râtelier 8, à l'avant de celui-ci.

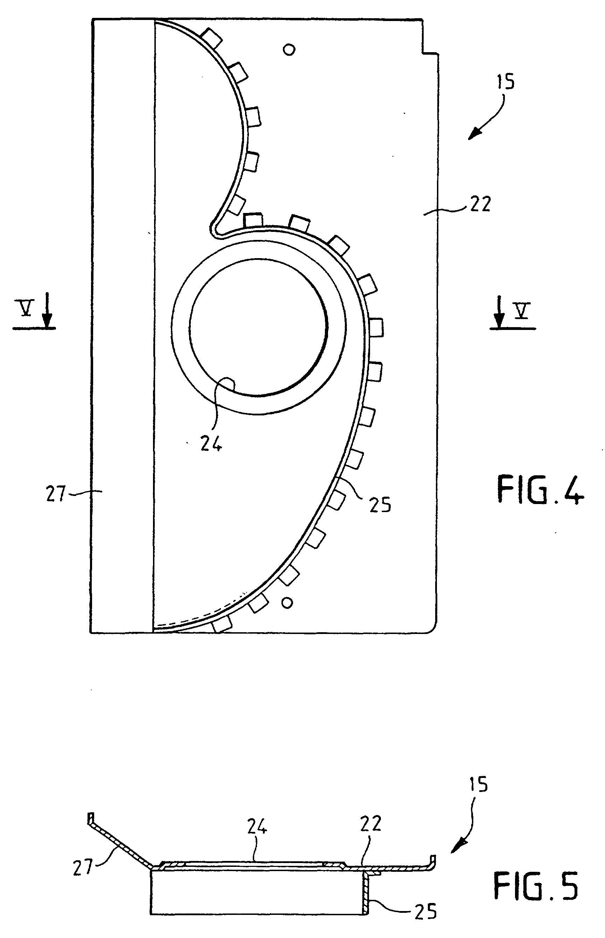

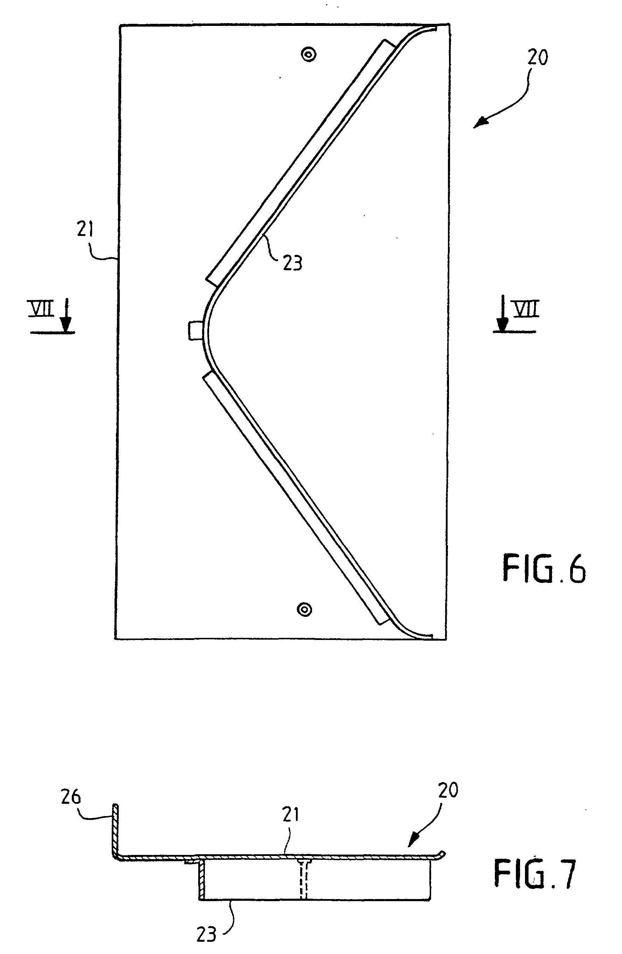

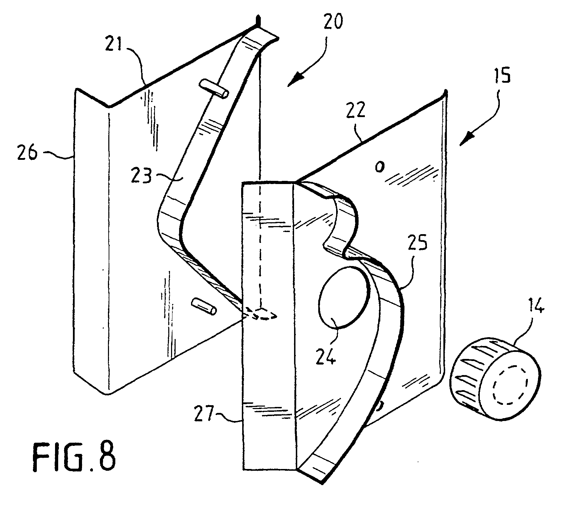

Par ailleurs, en regard des figures 4 à 8, les moyens de guidage 15 de l'air soufflé par la machine soufflante 14 comportent un diffuseur, s'étendant sur toute la hauteur du premier espace latéral 13A et ouvert vers ledit premier espace latéral pour répartir uniformément l'air soufflé dans celui-ci et interdire audit air soufflé de se diriger vers le second espace latéral 13B.

Le four 1 comporte également des moyens de guidage convergents 20 s'étendant sur toute la hauteur du second espace latéral 13B et adressant, à l'aspiration centrale de la machine soufflante 14, l'air circulant dans ledit second espace latéral.

Plus en détail, le diffuseur et les moyens de guidage convergents 20 forment un ensemble comportant :
- deux plaques 21 et 22 parallèles entre elles et à la paroi arrière 7 du caisson ;
- une lame 23 au moins approximativement en forme de V, emprisonnée entre les plaques 21, 22 et délimitant avec elles un espace convergent qui s'évase en direction du second espace latéral 13B et communique avec celui-ci par son extrémité évasée ;
- une ouverture 24 pratiquée dans la plaque 22 au voisinage du sommet dudit espace convergent et susceptible de mettre en communication celui-ci avec l'aspiration centrale de la machine soufflante 14 ; et
- une volute de diffusion 25 disposée du côté de la plaque 22, pourvue de l'ouverture 24, opposé audit espace convergent (et donc à la lame 23 solidaire de la plaque 21), la volute 25 étant ouverte à l'opposé dudit espace convergent (lame 23), en direction du premier espace latéral 13A, et assurant essentiellement la répartition homogène de l'air du haut en bas du caisson.

En outre, des lèvres 26 et 27 solidaires, respectivement, des plaques 21 et 22 et formant un angle avec celles-ci, interdisent toute circulation d'air entre les premier et second espaces latéraux 13A, 13B à l'arrière du râtelier 8.

## Revendications

1. Four pour le chauffage d'aliments, comportant :
- un caisson (2) délimitant une enceinte de chauffage et pourvu, outre d'un plafond (3) et d'un plancher (4), d'une porte d'accès avant (5), de deux parois latérales opposées (6) et d'une paroi arrière (7) ;
- un râtelier (8) servant d'étagères (9) à des supports (10) sur lesquels peuvent être placés lesdits aliments et pourvu de deux parois latérales perforées opposées (12), ledit râtelier (8) étant disposé à l'intérieur dudit caisson (2) de façon à créer des premier et second espaces latéraux (13A, 13B) opposés entre lesdites parois latérales (12) dudit râtelier (8) et lesdites parois latérales (6) dudit caisson (2) ;
- une machine soufflante (14) à aspiration centrale et à soufflage périphérique, montée sur ladite paroi arrière (7) dudit caisson ;
- des moyens de guidage (15) de l'air soufflé par ladite machine soufflante (14) pour l'introduire latéralement entre ledit râtelier (8) et ledit caisson (2) ; et
- des moyens de chauffage (16) dudit air soufflé par ladite machine soufflante (14),
caractérisé :
- en ce que lesdits moyens de guidage (15) de l'air soufflé par ladite machine soufflante (14) comportent un diffuseur, ouvert vers ledit premier espace latéral (13A) pour répartir uniformément l'air soufflé dans celui-ci et interdire audit air soufflé de se diriger vers ledit second espace latéral (13B);
- en ce qu'il comporte des moyens de guidage convergents (20) pour adresser, à l'aspiration centrale de ladite machine soufflante (14), l'air circulant dans ledit second espace latéral (13B), de sorte que lesdits moyens de guidage (15) de l'air, soufflé par ladite machine soufflante (14) et chauffé, sont destinés à adresser ledit air uniquement audit premier espace latéral (13A) et que ladite machine soufflante (14) est destinée à aspirer ledit air uniquement dans ledit second espace latéral (13B).

2. Four selon la revendication 1,
caractérisé en ce que ledit diffuseur (15) s'étend sur toute la hauteur dudit premier espace latéral (13A).

3. Four selon la revendication 1,
caractérisé en ce que lesdits moyens de guidage convergents (20) s'étendent sur toute la hauteur dudit second espace latéral (13B).

4. Four selon l'une des revendications 1 à 3,
caractérisé en ce que ledit diffuseur et lesdits moyens de guidage convergents (20) forment un ensemble comportant :
- deux plaques (21, 22) parallèles entre elles et à la paroi arrière (7) dudit caisson (2) ;
- une lame (23) au moins approximativement en forme de V, emprisonnée entre lesdites plaques (21, 22) et délimitant avec elles un espace convergent qui s'évase en direction dudit second espace latéral (13B) et communique avec celui-ci par son extrémité évasée ;
- une ouverture (24) pratiquée dans l'une (22) desdites plaques au voisinage du sommet dudit espace convergent et susceptible de mettre en communication celui-ci avec l'aspiration centrale de ladite machine soufflante (14); et
- une volute de diffusion (25) disposée du côté de la plaque (22) pourvue de ladite ouverture (24), opposé audit espace convergent, ladite volute étant ouverte à l'opposé dudit espace convergent, en direction dudit premier espace latéral (13A).

5. Four selon l'une des revendications 1 à 4,
caractérisé en ce que ledit caisson (2) présente des réglettes longitudinales (18) à l'intérieur des parois latérales dudit caisson.

6. Four selon l'une des revendications 1 à 5,
caractérisé en ce que des bossages longitudinaux (19) sont prévus dans les parois latérales (6) dudit caisson (2) de façon à assurer un guidage et une répartition homogène de l'air dans lesdits espaces latéraux (13A, 13B).

7. Four selon l'une des revendications 1 à 6,
caractérisé en ce que deux lèvres verticales (12A), solidaires chacune d'une paroi latérale (12) dudit râtelier (8) et sensiblement à angle droit par rapport à celle-ci sont prévues en bout de râtelier, interdisant toute circulation d'air entre lesdits premier (13A) et second (13B) espaces latéraux à l'avant dudit râtelier (8).

8. Four selon la revendication 4,
caractérisé en ce que deux lèvres (26, 27) solidaires, respectivement, desdites plaques (21, 22) et formant un angle avec celles-ci, interdisent toute circulation d'air entre lesdits premier (13A) et second (13B) espaces latéraux à l'arrière dudit râtelier (8).

## Patentansprüche

1. Ofen zum Erwärmen von Lebensmitteln, der umfasst:
- einen Behälter (2), der eine Wärmekammer begrenzt und außer mit einer Decke (3) und einem Boden (4) mit einer vorderen Zugangstür (5), zwei gegenüberliegenden Seitenwänden (6) und einer Rückwand (7) versehen ist;
- ein Gestell (8), das Etagenauflagen (9) für Träger (10) bereitstellt, auf welche die Lebensmittel gelegt werden können, und das mit zwei gegenüberliegenden, mit Löchern versehenen Seitenwänden (12) versehen ist, wobei das Gestell (8) im Inneren des Behälters (2) so angeordnet ist, dass gegenüberliegende erste und zweite seitliche Räume (13A, 13B) zwischen den Seitenwänden (12) des Gestells (8) und den Seitenwänden (6) des Behälters (2) erzeugt werden;
- eine Gebläseeinrichtung (14) mit zentraler Ansaugung und zum peripheren Balsen, die an der Rückwand (7) des Behälters angebracht ist;
- Führungsmittel (15) für die von der Gebläseeinrichtung (14) geblasene Luft, um sie seitlich zwischen das Gestell (8) und den Behälter (2) zu verteilen;
- Heizmittel (16) für die von der Gebläseeinrichtung (14) geblasene Luft,
dadurch gekennzeichnet,
- dass die Führungsmittel (15) für die von der Gebläseeinrichtung (14) geblasene Luft einen Verteiler umfassen, der zum ersten seitlichen Raum (13A) hin offen ist, um die in diesen geblasene Luft gleichmäßig zu verteilen und der geblasenen Luft zu verwehren, auf den zweiten seitlichen Raum (13B) zuzusteuern;
- dass dieser zusammenlaufende Führungsmittel (20) umfasst, um die im zweiten seitlichen Raum (13B) zirkulierende Luft zur zentralen Ansaugung der Gebläseeinrichtung (14) zu schicken, so dass die Führungsmittel (15) für die Luft, die von der Gebläseeinrichtung geblasen und erwärmt wird, dafür vorgesehen sind, die Luft nur zum ersten seitlichen Raum (13A) zu schicken, und dass die Gebläseeinrichtung (14) dafür vorgesehen ist, die Luft nur im zweiten seitlichen Raum (13B) anzusaugen.

2. Ofen nach Anspruch 1, dadurch gekennzeichnet, dass sich der Verteiler (15) über die gesamte Höhe des ersten seitlichen Raums (13A) erstreckt.

3. Ofen nach Anspruch 1, dadurch gekennzeichnet, dass sich die zusammenlaufenden Führungsmittel (20) über die gesamte Höhe des zweiten seitlichen Raums (13B) erstreckt.

4. Ofen nach einem der Ansprüche 1 bis 3, dadurch gekennzeichnet, dass der Verteiler und die zusammenlaufenden Führungsmittel (20) eine Einheit bilden, die umfasst:
- zwei Platten (21, 22), die zueinander und zur Rückwand (7) des Behälters (2) parallel sind;
- einen wenigstens annähernd V-förmigen Streifen (23), der zwischen den Platten (21, 22) eingeschlossen ist und mit ihnen einen konvergierenden Raum begrenzt, der sich in Richtung des zweiten seitlichen Raumes (13B) erweitert und mit diesem durch sein erweitertes Ende in Verbindung steht;
- eine Öffnung (24), die in einer der Platten (22) in der Nähe der Spitze des konvergierenden Raumes angebracht und geeignet ist, diesen mit der zentralen Ansaugung der Gebläseeinrichtung (14) in Verbindung zu bringen; und
- ein Spiralelement (25) zur Verteilung, das neben der mit der Öffnung (24) versehenen Platte (22) gegenüber dem konvergierenden Raum angeordnet ist, wobei das Spiralelement im Gegensatz zum konvergierenden Raum in Richtung des ersten seitlichen Raumes (13A) offen ist.

5. Ofen nach einem der Ansprüche 1 bis 4, dadurch gekennzeichnet, dass der Behälter (2) auf der Innenseite der Seitenwände des Behälters in Längsrichtung verlaufende Leisten (18) aufweist.

6. Ofen nach einem der Ansprüche 1 bis 5, dadurch gekennzeichnet, dass auf den Seitenwänden (6) des Behälters (2) in Längsrichtung verlaufende Erhöhungen (19) vorgesehen sind, um eine Führung und eine homogene Verteilung der Luft in den seitlichen Räumen (13A, 13B) sicherzustellen.

7. Ofen nach einem der Ansprüche 1 bis 6, dadurch gekennzeichnet, dass zwei vertikale Lippen (12A), die jeweils mit einer Seitenwand (12) des Gestells (8) und im wesentlichen in einem rechten Winkel zu dieser fest verbunden sind, am Ende des Gestells vorgesehen sind, die jegliche Zirkulation von Luft zwischen den ersten (13A) und zweiten (13B) seitlichen Räumen vor dem Gestell (8) verwehren.

8. Ofen nach Anspruch 4, dadurch gekennzeichnet, dass zwei Lippen (26, 27), die entsprechend mit den Platten (21, 22) fest verbunden sind und mit diesen einen Winkel bilden, jegliche Zirkulation zwischen den ersten (13A) und zweiten (13B) seitlichen Räumen hinter dem Gestell (8) verwehren.

## Claims

1. Oven for warming food, comprising:
- a carcass (2) delimiting a heating chamber and equipped with, in addition to a roof (3) and a floor (4), a front access door (5), two opposed sidewalls (6) and a back wall (7);
- a rack (8) acting as shelving (9) for supports (10) on which the said food can be placed, and provided with two opposed perforated sidewalls (12), the said rack (8) being placed inside the said carcass (2) so as to create first and second opposed lateral spaces (13A, 13B) between the said sidewalls (12) of the said rack (8) and the said sidewalls (6) of the said carcass (2);
- a blower unit (14) with its intake at the centre and which blows out peripherally, mounted on the said back wall (7) of the said carcass;
- means (15) of guiding the air blown by the said blower unit (14) for introducing the said air laterally between the said rack (8) and the said carcass (2); and
- means (16) of heating the said air blown by the said blower unit (14),
characterized:
- in that the said means (15) of guiding the air blown by the said blower unit (14) comprise a diffuser open towards the said first lateral space (13A) so as to distribute the blown air uniformly into this space and prevent the said blown air from travelling towards the said second lateral space (13B);
- and in that the oven comprises convergent guide means (20) to conduct the air circulating in the said second lateral space (13B) towards the central intake of the said blower unit (14),
- such that the said means (15) of guiding the air, blown by the said blower unit (14) and heated, are intended to direct the said air only towards the said first lateral space (13A) and such that the said blower unit (14) is intended to draw the said air only from the said second lateral space (13B).

2. Oven according to Claim 1,
characterized in that the said diffuser (15) extends over the entire height of the said first lateral space (13A).

3. Oven according to Claim 1,
characterized in that the said convergent guide means (20) extend over the entire height of the said second lateral space (13B).

4. Oven according to one of Claims 1 to 3,
characterized in that the said diffuser and the said convergent guide means (20) form an assembly comprising:
- two plates (21, 22) which are mutually parallel and parallel to the back wall (7) of the said carcass (2);
- an at least approximately V-shaped strip, trapped between the said plates (21, 22) and with them delimiting a convergent space which widens towards the said second lateral space (13B) and communicates with the latter via its wide end;
- an opening (24) made in one (22) of the said plates near the vertex of the said convergent space and capable of placing the latter in communication with the central intake of the said blower unit (14); and
- a diffusion shroud (25) placed on the side of the plate (22) that has the said opening (24) which is not the same side as the said convergent space, the said shroud being open in the opposite direction to the said convergent space, towards the said first lateral space (13A).

5. Oven according to one of Claims 1 to 4,
characterized in that the said carcass (2) has longitudinal strips (18) inside the sidewalls of the said carcass.

6. Oven according to one of Claims 1 to 5,
characterized in that longitudinal bosses (19) are provided in the sidewalls (6) of the said carcass (2) so as to guide and uniformly distribute the air in the said lateral spaces (13A, 13B).

7. Oven according to one of Claims 1 to 6,
characterized in that two vertical lips (12A), each one secured to a sidewall (12) of the said rack (8) and approximately at right angles with respect thereto, are provided at the end of the rack, preventing any air from circulating between the said first (13A) and second (13B) lateral spaces at the front of the said rack (8).

8. Oven according to Claim 4,
characterized in that two lips (26, 27), respectively secured to the said plates (21, 22) and making an angle between them, prevent any air from circulating between the said first (13A) and second (13B) lateral spaces at the back of the said rack (8).
